# EUROPEAN PATENT APPLICATION

(11) **EP 4 575 873 A1**
(43) Date of publication of application: **25.06.2025**
(21) Application number: 23218096.8
(22) Date of filing: 19.12.2023
(51) Int. Cl.: G06F 30/15, G01H 1/10, G01P 15/00, G06F 30/27, G01P 15/08, G01P 21/00, G06F 119/04, G06F 119/14

(54) **VIRTUAL SHOCK-LOAD SENSOR**

(71) Applicant: Romax Technology Limited, Cobham KT11 1HY (GB)
(72) Inventor: James, Barry, Cobham, KT11 1HY (GB)
(74) Representative: Kaminski Harmann

(57) **Abstract**

The invention pertains to a method (100) for predicting failure of one or more components of an individual vehicle, the vehicle comprising a plurality of generic sensors, the method comprising: providing (110) an individual digital twin for the vehicle, the digital twin comprising virtual components that are digital representations of the one or more components of the vehicle; providing (120) digital generic sensors at the digital twin, wherein each digital generic sensor is a digital representation of one of the plurality of generic sensors and generates virtual generic data; providing (125) a digital shock load sensor at each of the virtual components, each digital shock load sensor generating virtual shock load data; performing a simulation involving the digital twin, wherein virtual generic data and virtual shock load data are generated simultaneously; monitoring (130), during the simulation, the virtual generic data and the virtual shock load data; and deriving (140) a relationship between the virtual shock load data and the virtual generic data, wherein the method further comprises: continuously monitoring (150), during a motion of the vehicle, generic sensor data generated by the plurality of generic sensors; inferring (160), based on the monitored generic sensor data and using the derived relationship, actual shock loads affecting each of the one or more components; estimating (170), based on the inferred shock loads, a damage to and/or a time to failure of the one or more components and updating (180) the individual digital twin based on the estimated damage and/or time of failure.

## Description

The present invention pertains to a method for determining, using a virtual sensor, shock loads in a vehicle, particularly in its drive system, and for predicting component failure due to these shock loads.

It is known that shocks adversely affect the reliability of certain components and structures of machines. This is particularly relevant for vehicles. Although it is possible to mount respective sensors, such as strain gauges or accelerometers, at various relevant locations in the vehicle (e.g., on the driveshafts, around various locations in the vehicle) to directly measure mechanical shocks during operation of the vehicle, this is expensive for test vehicles and completely unfeasible for production vehicles.

It is also known that virtual sensors can be used for determining parameters that cannot be measured directly. A virtual sensor allows measuring a relevant parameter indirectly by measuring another parameter and then using a known relationship between the two parameters to derive the first parameter. For instance, instead of directly measuring the mass of an object, by measuring the deflection of a spring of known stiffness while the object pushes down on the spring a force exerted by gravity is determined and the mass of the object can be derived. Vehicles usually measure certain parameters that can be recorded as CAN data (CAN = controller area network) on a CAN bus of the vehicle: e.g., wheel speeds, accelerations (in different directions), vehicle speeds etc. It is further known to cover a test specimen (e.g., a prototype) of a vehicle with additional sensors (i.e. strain gauges, accelerometers) to directly measure a multitude of further parameters, including shock loads. By driving the vehicle test specimen around different roads, training data can be generated comprising the simultaneous recording of the CAN data and the additional sensor data. Then, e.g., regression analysis can be carried out to determine a relationship between the vehicle's regular sensors (providing data to the CAN bus) and the additional sensors (strain gauges, accelerometers) of the test specimen. Based on the determined relationship, parameters measured by the regular sensors on the production vehicles can be used to infer further parameters, including shock load, without the need to actually measure them directly.

It would be desirable to save cost and time when obtaining the additional sensor values. In particular, it would be desirable to derive the relationship between actual sensors and virtual sensors without having to perform measurements using an actual test specimen equipped with actual sensors.

It is known to provide a digital twin of a machine based on physics. For instance, EP4 163 740 A1 discloses updating digital twins of a tooling machine based on measurements performed on workpieces produced by these tooling machines. Model updating is an example of where the properties of a Finite Element model are updated based on measurements obtained from testing a physical specimen.

It is an objective of the present invention to provide an improved method for inferring parameters, particularly shock loads, in a vehicle.

It is another objective, to provide such a method which allows predicting failures of vehicle components before they occur.

In particular, it is an objective to provide such a method that saves cost and time, minimises data storage and transfer, overcomes data protection issues, and does not require user interaction.

It is a further aspect to provide such a method that can be performed in a fleet of vehicles.

At least one of these objectives is achieved by the computer-implemented method of claim 1, the computer-implemented method of claim 13, and/or the dependent claims of the present invention.

Aspects of the invention comprise providing a virtual sensor inferring shock loads in a vehicle based on data from a Controller Area Network (CAN) that is recorded and available within the vehicle.

A first aspect of the invention relates to computer-implemented method for predicting failure of one or more components of an individual vehicle, the vehicle comprising a plurality of generic sensors. The method comprises:
- providing an individual digital twin for the vehicle, the digital twin comprising virtual components that are digital representations of the one or more components of the vehicle;
- providing digital generic sensors at the digital twin, wherein each digital generic sensor is a digital representation of one of the plurality of generic sensors and generates virtual generic data;
- providing a digital shock load sensor at each of the virtual components of interest, each digital shock load sensor generating virtual shock load data;
- performing a simulation involving the digital twin, the simulation comprising simulating the motion of the digital twin over a plurality of different surfaces, each of the different surfaces effecting different shock loads to the one or more components, wherein virtual generic data and virtual shock load data are generated simultaneously;
- monitoring, during the simulation, the virtual generic data and the virtual shock load data; and
- deriving, based on the monitored virtual data, a relationship between the virtual shock load data and the virtual generic data.

The method further comprises:
- continuously monitoring, during a motion of the actual vehicle, generic sensor data generated by the plurality of generic sensors;
- inferring, based on the monitored generic sensor data and using the derived relationship, actual shock loads affecting each of the one or more components;
- estimating, based on the inferred shock loads, a damage to and/or a time of failure of the one or more components; and
- updating the individual digital twin based on the estimated damage and/or time of failure.

According to some embodiments, the plurality of generic sensors comprises at least two, particularly at least four, wheel speed sensors, each wheel speed sensor generating wheel speed data for one wheel of the vehicle, for instance with a frequency of at least 100 Hz.

According to some embodiments, the one or more components comprise at least one of gears, bearings, suspension links, body panels, welds, and electronic components.

According to some embodiments, the digital twin represents a physics-based model that also depicts dynamics and/or behaviour of the vehicle and describes changes to the vehicle and its components due to wear and/or fatigue damage during operation.

Accordingto some embodiments, updating the digital twin comprises updating each digital representation of the one or more components based on the estimated damage to and/or the estimated time of failure of the respective component.

According to some embodiments, the vehicle does not comprise any shock load sensors - or more precisely does not comprise any shock load sensors at or assigned to the components.

According to some embodiments, the method further comprises automatically scheduling a maintenance for the vehicle based on the estimated damage and/or time to failure.

Accordingto some embodiments, at least a damage to the one or more components is estimated, and the method further comprises estimating an influence of the estimated damage on a behaviour of the respective component and/or on the vehicle.

According to some embodiments, performing the simulation comprises creating a surrogate model. In particular, the relationship between the virtual generic data and the virtual shock load data becomes the surrogate model.

According to some embodiments, training data is created by means of the simulation using a physics-based model of the vehicle. This physics-based model includes vehicle properties, a shape of each surface of the plurality of different surfaces, and at least one speed of the motion of the digital twin over the plurality of different surfaces. At least a subset of the vehicle properties relates to the components. The vehicle properties comprise at least one of mass, stiffness and damping of the components. The virtual generic data and the virtual shock load data may then be the output variables of the simulation. For instance, a neural network can be used for deriving the relationship between the virtual generic data and the virtual shock load data. Alternatively, other methods of greater or lesser complexity can be used, including for example regression analysis.

According to some embodiments, the simulation comprises simulating the motion of the digital twin over the plurality of different surfaces at a plurality of different speeds and/or with a plurality of different payloads.

According to some embodiments, at least the steps of continuously monitoring the generic sensor data and inferring the actual shock loads are performed by a computing unit on the vehicle.

A second aspect of the invention pertains to a method for predicting failure of one or more components of a plurality of individual vehicles of a fleet of same or similar vehicles, each individual vehicle of the fleet having a same set of components and a same set of generic sensors, the method comprising performing a method according to the first aspect of the invention for each of the plurality of individual vehicles.

According to some embodiments of this method, failures of the components of the plurality of individual vehicles are observed and estimating the damage and/or the time of failure is also based on the observed failures. For instance, observing the failures comprises observing a relationship between each failure with a respective estimated time of failure, and estimating the time of failure is based on the observed relationship.

A third aspect of the invention relates to a computer program product comprising program code having computer-executable instructions for performing a method according to the first aspect of the invention or a method according to the second aspect of the invention.

The invention in the following will be described in detail by referring to exemplary embodiments that are accompanied by figures, in which:
- Fig. 1: shows an exemplary embodiment of a vehicle, comprising components and generic sensors;
- Fig. 2: shows a digital twin of the vehicle of Fig. 1, the digital twin comprising additional sensors;
- Fig. 3: illustrates an exemplary embodiment of a method according to the invention for predicting failure of a vehicle or of one of its components; and
- Fig. 4: illustrates an exemplary data flow while the method of Fig. 3 is executed.

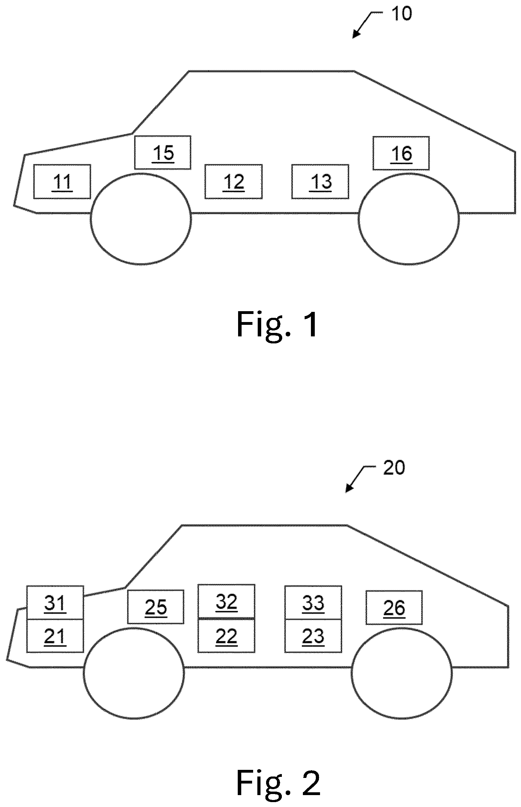

Figure 1 shows an example of a vehicle 10. The depicted vehicle is a four-wheeled car comprising a set of components 11, 12, 13 that may be negatively affected (e.g., damaged) by shock loads. However, shock loads occur (which are in addition to the lower-bound fatigue loading due to operation along a smooth surface) when the vehicle 10 runs over obstacles, bumps or holes in the ground. Too many and/or too heavy shock loads may damage these components 11, 12, 13 and finally may lead to their premature failure. Vehicle components that typically are affected by shock loads include but are not limited to gears, bearings, suspension links, body panels, welds, and electronic components.

The depicted vehicle 10 comprises a multitude of different sensors 15, 16 that provide their data to a Controller Area Network (CAN) of the vehicle for the purposes of the smooth and coordinated running of the vehicle. Since they are available in this communication network, they are also available for monitoring, processing and recording. These are generic sensors that measure parameters, such as accelerations or a vehicle speed, during operation of the vehicle for different purposes. In particular, these sensors 15, 16 comprise wheel speed sensors that generate wheel speed signals that are provided to an anti-lock braking system (ABS) of the vehicle 10. The vehicle 10 does not comprise any shock load sensors, especially since shocks occur in different ways at different points in the vehicle and implementing corresponding sensors at every point in the vehicle would be very expensive.

Although the vehicle 10 is depicted here as a passenger car, the claimed invention may also be applied to other kinds of vehicles, e.g., buses, vans, lorries, trucks, construction vehicles, agricultural vehicles, motorcycles, airplanes etc. Also, the vehicle 10 may be a tracked vehicle, e.g. an armoured tracked vehicle or a bulldozer.

Figure 2 shows a digital twin 20 of the vehicle of Figure 1, the digital twin representing a physics-based model that also depicts dynamics and/or behaviour of the vehicle. It can also describe changes to the vehicle and its components during operation such as fatigue and wear. Being a copy of the individual vehicle, the digital twin 20 comprises virtual components 21, 22, 23 that are digital representations of the vehicle's components, as well as digital sensors 25, 26 that are digital representation of the vehicle's generic sensors and are configured for generating virtual generic data during a simulation. It also comprises the properties of the vehicle and specifically the path that the shock loads will take through the vehicle as they travel from the road surface, through the tyres, through the vehicle to the virtual components 21, 22, 23. Additionally, at each of the virtual components 21, 22, 23 a digital shock load sensor 31, 32, 33 is provided that is configured for generating virtual shock load data during a simulation. The digital shock load sensors 31, 32, 33 have no counterpart in the actual vehicle. Further digital sensors that have no counterpart in the actual vehicle may be added, for instance for measuring weld stresses.

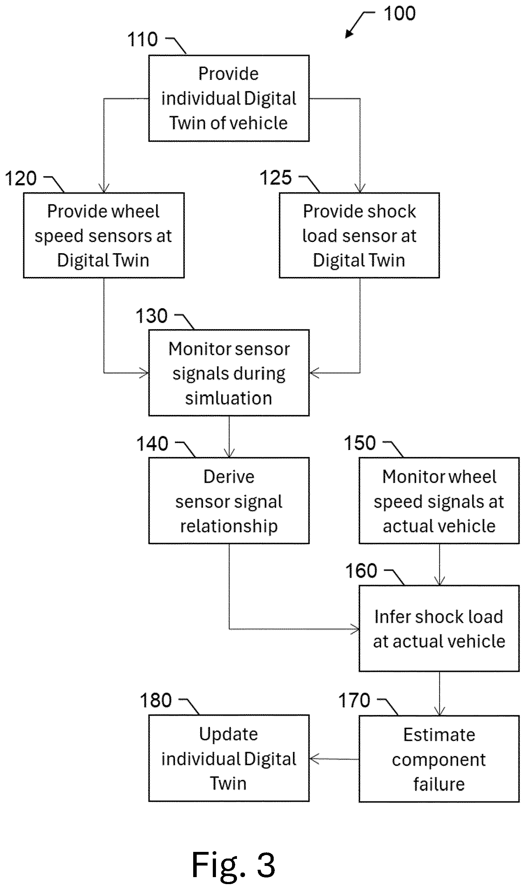

Figure 3 shows a flow chart illustrating an exemplary embodiment of a method 100 for predicting failure of a vehicle or of one of its components. According to the shown embodiment, a digital twin is used together with up-to-date operational data to predict faults, interruptions or operational errors, in particular due to shock loads acting on the transmission and other components of the vehicle and its drive train. Data from existing sensors is used, primarily the wheel sensors that detect the rotation. The change in the rotational frequency can indicate corresponding shocks or load changes, e.g. when driving over obstacles.

In a first step 110, a digital twin of an individual vehicle is provided. The digitaltwin is an up-to-date lifetime digital twin of the vehicle, i.e., it represents a physics-based model that also depicts the dynamics of the vehicle system or the corresponding behaviour and is not just a static structural description. The digital twin accounts for the response (in terms of deflections, i.e. strain and hence stress) of the vehicle to both static and dynamic loads. This digital twin may be based on the nominal dimensions and properties of the vehicle defined during the vehicle design process; it may be that the dimensions and properties are updated for each individual vehicle based on measurements taken during the manufacturing process; furthermore, it may be that the dimensions and properties are updated during vehicle operation based on changes due to operation, e.g. wear.

Instead of mounting strain gauges or other such sensors on a plurality of components so as to directly measure the mechanical shocks during operation of the vehicle, the method comprises monitoring what can be monitored easily (i.e., the CAN signals) and then inferring values for the shock loads using a surrogate model that is created, which links the CAN signals to the shock loads of interest. The surrogate model is created using a simulation model of the vehicle, using Multi-Body Simulation (MBS) tools such as Adams or Simpack. They come in various forms, but in all cases the surrogate model aims to calculate data concerning the vehicle operation in a reduced timeframe and/or with reduced computational effort compared to the original Multi-Body Simulation Model.

One such example of a surrogate model is a data-based surrogate model. Some refer to this as a meta-model, and others assign the term Reduced Order Model, however no order reduction takes place in its creation. The virtual model (digital twin) is run over many different road and driving conditions. A record of the virtual CAN signals (wheel speeds, plus others as appropriate) is matched to a record of the virtual sensor values (gear shock loads, weld stresses etc.). Following this, the data-based surrogate model is made which provides a relationship between the CAN signals of interest and the virtual sensor values of interest. The process of creating this data-based surrogate model may be carried out by one or more of various related methods including machine learning and regression analysis.

Another example of a surrogate model is a Reduced Order Model. Again, this model runs faster and with less computation than the full MBS model, but this is achieved through reducing the order of the equation used to solve the mathematical model. In contrast to a data-based surrogate model, the physics-based understanding of the vehicle behaviour is retained.

The vehicle comprises a multitude of different generic sensors that provide their data to a Controller Area Network (CAN) of the vehicle so that they are recorded and available within in the vehicle. These sensors include wheel speed sensors. Since the digital twin is a copy of the individual vehicle, also the digital twin is equipped 120 with wheel speed sensors (and optionally also any other sensor the vehicle comprises.) In addition, virtual sensors (which the actual vehicle does not have) for calculating shock loads are provided 125 at the digital twin.

Training data for a surrogate model is generated synthetically, using a physics-basd model, with sensor data serving as input variables which are linked by the model to the output variables of the shock load. This includes monitoring 130 the sensor signals of at least the wheel speed sensors and the shock load virtual sensors during a simulation in which the vehicle's digital twin is driven around different roads at different speeds with different weights etc., i.e., is exposed to different road conditions that effect shock loads to different degrees.

The training data is created by this simulation and by the simultaneous recording of the CAN data (comprising at least the data from the wheel speed sensors) and the shock load virtual sensor data. The wheel speed sensors are of principal interest, since they generate wheel speed signals that are required to provide information to the ABS and therefore are monitored at moderately high frequency (≥ 100 Hz). When a vehicle drives along a smooth road, the wheels rotate at a constant speed. When a vehicle hits a bump, hole or some other obstacle, the wheel speeds vary even if the vehicle's longitudinal speed remains more or less constant. Depending on the type of vehicle, also other signals on the CAN bus may be influenced and can be used. Optionally, the simulation may also be used to predict the effect of the shock loads on the individual components.

Based on the monitored sensor signals, a relationship between the signals from the wheel speed sensors and the shock load sensors can be derived 140. For instance, this may include performing a regression analysis.

Then, in the actual vehicle, the signals from the wheel speed signals (and optionally other available sensor data) can be monitored 150 continuously. Using the derived relationship between these sensor signals and the shock load sensor data, based on the monitored data, shock load on the components of the actual vehicle may be inferred 160 continuously and without the need for the installation of actual sensors at multiple locations in the vehicle.

The inferred shock loads may then be used to estimate 170 vehicle failure or damages to the components. For instance, for each of a multitude of vehicle components (in particular every component to which a shock load sensor has been provided in the digital twin), it can be estimated, whether and by what degree a reliability of the respective component is affected, and/or it can be predicted when the respective component is expected to fail. This may also comprise predicting a point of time at which the component needs to be replaced or fixed. Optionally, this allows scheduling a maintenance appointment for the vehicle.

For instance, for estimating 170 the failure and/or damages in each component, a physics-based simulation may be used to:
(i) determine stress based on the inferred shock load;
(ii) determine damage based on the determined stress, e.g., using an S-N curve;
(iii) predict a probability of failure using the determined damage; and
(iv) plan an action regarding maintenance.

If failure rates are observed - e.g., in a fleet of similar vehicles having the same or similar components - the failure prediction may be continuously updated so that observation and prediction match. This may involve using machine learning and/or adjusting input parameters for the physics-based simulation.

Finally, using the damage/failure estimation 170 for each components, the digital twin of the individual vehicle can be updated 180. Tying the shock loads from the vehicle to the digital twin allows insight into the loads on components. Based on failure data provided from in-service history of the vehicle type, existing failure models can be refined and optionally also used to develop and refine new physics models. Optionally, the simulation may be repeated with the updated digital twin. This also allows updating the relationship between the signals from the wheel speed sensors and the shock load sensors.

The vehicle may be part of a fleet of same or similar vehicles, wherein each individual vehicle has a same set of components and a same set of generic sensors. In this case the method 100 described above may be performed for each vehicle individually. This allows aggregation of data from the entire fleet. Specifically, predicted component failures and actually occurring component failures may be monitored centrally, so that the estimation 170 of damages and/or failures may be continuously adapted to facilitate the match of the prediction to the observation. Detecting relationships between estimated and observed failures and adapting the estimation 170 may involve using machine learning and/or adjusting input parameters for the physics-based simulation.

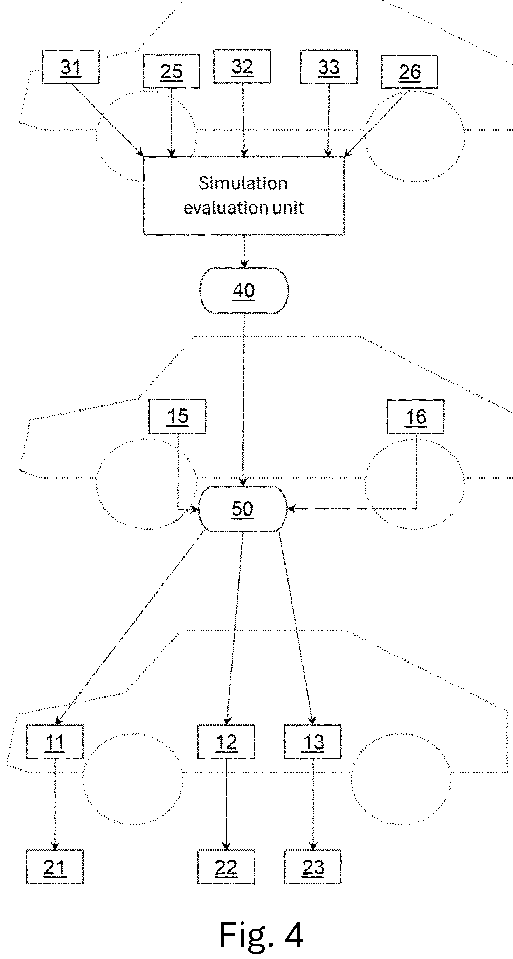

Figure 4 illustrates a flow of data in an exemplary system according to the invention. During a simulation, all available digital sensors in the digital twin, i.e., digital generic sensors 25, 26 (including the digital wheel drive sensors) and digital shock load sensors 31, 32, 33 generate virtual data and provide this to a simulation evaluation unit. This evaluation unit monitors the data during the simulation and derives a relationship 40 between the signals from the digital shock load sensors and the other digital sensors (in particular at least the digital wheel speed sensors). This becomes the surrogate model. For instance, a regression analysis may be performed for deriving the relationship 40.

During the simulation, the vehicle's digital twin may be driven around different simulated roads, i.e., is exposed to different road conditions that effect shock loads of different kinds and degrees. Since physics-based simulations often are not fast enough for real-time applications (real time being a simulation of 1 second of machine operation completed in less than 1 second of elapsed time), a surrogate model may be created to run in its place. This surrogate model may be a data-based surrogate model, obtained by running the simulation offline many times, with different input parameters, then deriving a statistical relationship between inputs and outputs. This relationship becomes the surrogate model - it gives the same input-output relationship, but without actually calculating (or even necessarily considering) the actual physics and is typically much faster. Alternatively, the surrogate model may be a reduced order model, consisting of a physics-based model but with the mathematical description of the physics simplified for the purposes of speed. If it is a statistical relationship, this can be achieved through simple look-up tables, linear regression, multi-variant regression, machine learning and artificial intelligence, which are all considered as similar methods of gradually increasing complexity. If it retains elements of physics, then this is achieved by reducing the order of the equation that describes the physics.

When the simulation is finished, the derived relationship 40 may be used to infer shock loads 50 from sensor data (CAN signals) of the generic sensors 15, 16 of the actual vehicle. That is, every time the actual vehicle runs over an obstacle, the data provided by the generic sensors 15, 16 slightly deviates, and using the derived relationship 40 this deviation is interpreted as an indicator for a certain kind and magnitude of shock load 50 at each (or at least a subset) of the vehicle's components 11, 12, 13. It is possible for the CAN signals to be recorded and transferred off the vehicle for processing by the surrogate model on an external device, e.g., a desktop or laptop computer. It is also possible for it to be processed in the cloud (centralised, but non-specific computer resource). However, the simplest approach is to carry out this processing on the vehicle. This is because the volumes of input data (CAN data) accumulates rapidly if the full-time history is recorded, and when looking at the full fleet (thousands or millions of vehicles) this becomes impossible. On the other hand, it is possible to reduce the data volume by many orders of magnitude by converting the CAN signals into a record of relevant shock loads and then discarding the time history of CAN data. By processing the data on the vehicle, most information is essentially obfuscated - no information can be inferred from the shock load data and the driver's personal privacy is protected. However, the frequency and magnitude of the shock loads, being the information most important to the engineer, is recorded.

The inferred shock load 50 at the respective components 11, 12, 13 may then be used for updating the digital twin by adding the respective information to the respective virtual components 21, 22, 23. Thus, every virtual component includes information about all past shock loads, plus stress values from regular vehicle operation, from which a statistical chance of damage or a potential for failure of the respective real component can be derived. This information may then be used for informing the driver or owner of the vehicle or for automatically scheduling a maintenance of the vehicle or the respective component.

The synthetic training data may be generated by a physics-based model of the connection between the various parameters, which the individual system represents dynamically (Lifetime Digital Twin). The digital twin is therefore used twice, i.e., as a basis for prediction and as a model system for (synthetic) training data generation.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for predicting failure of one or more components (11-13) of an individual vehicle (10), the vehicle comprising a plurality of generic sensors (15-16), the method comprising:
- providing (110) an individual digital twin (20) for the vehicle (10), the digital twin comprising virtual components (21-23) that are digital representations of the one or more components (11-13) of the vehicle (10);
- providing (120) digital generic sensors (25-26) at the digital twin (20), wherein each digital generic sensor is a digital representation of one of the plurality of generic sensors (15-16) and generates virtual generic data;
- providing (125) a digital shock load sensor (31-33) at each of the virtual components (21-23), each digital shock load sensor (31-33) generating virtual shock load data;
- performing a simulation involving the digital twin (20), the simulation comprising simulating a motion of the digital twin (20) over a plurality of different surfaces, each of the different surfaces effecting different shock loads to the one or more components (11-13), wherein virtual generic data and virtual shock load data are generated simultaneously;
- monitoring (130), during the simulation, the virtual generic data and the virtual shock load data; and
- deriving (140), based on the monitored virtual data, a relationship (40) between the virtual shock load data and the virtual generic data,
wherein the method (100) further comprises:
- continuously monitoring (150), during a motion of the vehicle (10), generic sensor data generated by the plurality of generic sensors (15-16);
- inferring (160), based on the monitored generic sensor data and using the derived relationship (40), actual shock loads (50) affecting each of the of one or more components (11-13);
- estimating (170), based on the inferred shock loads (50), a damage to and/or a time to failure of the one or more components (11-13); and
- updating (180) the individual digital twin (20) based on the estimated damage and/or time to failure.

2. Method (100) according to claim 1, wherein the plurality of generic sensors (15-16) comprises at least two, particularly at least four, wheel speed sensors, each wheel speed sensor generating wheel speed data for one wheel of the vehicle (10), particularly with a frequency of at least 100 Hz.

3. Method (100) according to claim 1 or claim 2, wherein the one or more components (11-13) comprise at least one of:
- gears,
- bearings,
- suspension links,
- body panels,
- welds, and
- electronic components.

4. Method (100) according to any one of the preceding claims, wherein the digital twin (20) represents a physics-based model that also depicts dynamics and/or behaviour of the vehicle (10) and describes changes to the vehicle (10) and its components (11-13) due to wear and/or fatigue damage during operation.

5. Method (100) according to claim 4, wherein updating (180) the digital twin (20) comprises updating each digital representation (21-23) of the one or more components (11-13) based on the estimated damage to and/or time of failure of the respective component.

6. Method (100) according to any one of the preceding claims, wherein the vehicle (10) does not comprise any shock load sensors.

7. Method (100) according to any one of the preceding claims, further comprising automatically scheduling a maintenance for the vehicle (10) based on the estimated damage and/or time to failure.

8. Method (100) according to any one of the preceding claims, wherein at least a damage to the one or more components (11-13) is estimated, and the method further comprises estimating an influence of the estimated damage on a behaviour of the respective component and/or on the vehicle (10).

9. Method (100) according to any one of the preceding claims, wherein performing the simulation comprises creating a surrogate model, particularly wherein the relationship (40) becomes the surrogate model.

10. Method (100) according to claim 9, wherein training data is created through the simulation using a physics-based model of the vehicle (10), wherein the physics-based model includes vehicle properties, a shape of each surface of the plurality of different surfaces, and at least one speed of the motion of the digital twin over the plurality of different surfaces, the vehicle properties comprising at least one of mass, stiffness and damping of the components (11-13), in particular wherein
- the virtual generic data and the virtual shock load data are output variables of the simulation; and/or
- a neural network is used for deriving (140) the relationship (40).

11. Method (100) according to any one of the preceding claims, wherein the simulation comprises simulating the motion of the digital twin (20) over the plurality of different surfaces at a plurality of different speeds and/or with a plurality of different payloads.

12. Method (100) according to any one of the preceding claims, wherein at least the steps of continuously monitoring (150) the generic sensor data and inferring (160) the actual shock loads (50) are performed by a computing unit on the vehicle (10).

13. Computer-implemented method for predicting failure of one or more components (11-13) of a plurality of individual vehicles (10) of a fleet of same or similar vehicles, each individual vehicle of the fleet having a same set of components (11-13) and a same set of generic sensors (15-16), the method comprising performing a method (100) according to any one of the preceding claims for each of the plurality of individual vehicles (10).

14. Method according to claim 13, wherein failures of the components (11-13) of the plurality of individual vehicles (10) are observed, and estimating (170) the damage and/or the time to failure is also based on the observed failures, particularly wherein observing the failures comprises observing a relationship between each failure with a respective estimated time to failure, and estimating (170) the time to failure is based on the observed relationship.

15. Computer program product comprising program code having computer-executable instructions for performing one of the methods according to any one of the preceding claims.
